# EUROPEAN PATENT APPLICATION

(11) **EP 3 974 868 A1**
(43) Date of publication of application: **30.03.2022**
(21) Application number: 20198973.8
(22) Date of filing: 29.09.2020
(51) Int. Cl.: G01S 13/931, G01S 15/931, G01S 15/86, B60R 11/04, G01S 13/86, G01S 7/02

(54) **SENSOR SYSTEM MOUNTABLE ON THE ROOF OF A CAR.**

(71) Applicant: Inalfa Roof Systems Group B.V., 5807 GW Oostrum (NL)
(72) Inventor: Vervoort, Stephan Christiaan, 5831 HB Boxmeer (NL); Amsel, Christian, 59556 Lippstadt (DE)
(74) Representative: De Vries & Metman

(57) **Abstract**

A roof mountable sensor system for detecting an external condition is configured to be mounted on a roof of a vehicle. The sensor system has a field of detection.

The sensor system comprises an adaptation structure for adapting a position of the field of detection relative to the vehicle in accordance with a speed of the vehicle.

## Description

The invention relates to a roof mountable sensor system and a method for operating a roof mounted sensor system.

In a known vehicle, one or more sensors for detecting an external condition are provided. Such sensors may include sensors for detecting other traffic, for example. Such sensors may be used for autonomous driving functions. In a particular example, a radar sensor system may be provided to detect a distance to and a speed of a vehicle driving in front of the vehicle. Such distance and speed may be used to adapt a speed of the vehicle to prevent a collision, for example if the vehicle speed is determined and controlled by an autonomous driving system like a cruise control system.

For a sensor system for detecting an external condition, it is important that relevant other traffic is always detected in time. For example, when driving in city traffic at low speed, any pedestrians crossing need to be detected at a time that sufficient time remains to brake and bring the vehicle to a stand-still before hitting the pedestrian. In such busy city traffic, travelling at low speed, the sensor system is required to be able to detect other traffic relatively close in front of the vehicle. On a motorway, on the other hand, at a high speed, traffic much further away from the vehicle needs to be detected in time as the vehicle needs more time to reduce speed, preferably without braking, to prevent a collision.

The above-mentioned known radar sensor system is mounted in a front bumper unit. Thus, the radar sensor system is able to direct a field of detection straight forward such that the radar sensor system is enabled to detect objects and other traffic both close to the vehicle and further away from the vehicle.

Having a sensor system in a bumper unit or directly behind a bumper unit has several potential disadvantages. First of all, due to the low mounting height, i.e. close to the road surface, small objects and bumps in the road may be present in the sensor reading and thereby disturb or reduce the accuracy of the sensor reading. As a result, a maximum distance of detection may be reduced. Further, the sensor system is more subject to dirt and water splashing from the road surface. Yet another possible disadvantage is the risk of damage to the sensor system, as the bumper unit is intended to absorb minor collisions. Even if the sensor system is not damaged, it may be that the sensor system requires calibration after even the slightest collision. Moreover, in view of the primary function of the bumper unit, the bumper unit may not be very stiff and the mounting of the bumper unit does not need to be very stiff. As a result, it may be difficult and, as a result, not cost-effective to mount a sensor system at or behind the bumper unit.

Another disadvantage, depending on the kind of sensor, the bumper unit may be lacquered. In particular for a radar sensor system, such lacquer forms a barrier, reducing the maximum distance of detection.

Still, when mounting a sensor system at a higher position, other disadvantages may occur. For example, a field of detection may be relatively small such that a small object close in front of the vehicle may not be detectable.

It is desirable to be able to mount a sensor system at a higher level, while being able to detect a small object close in front of the vehicle.

In a first aspect, a roof mountable sensor system is provided. The roof mountable sensor system is configured for detecting an external condition and is configured to be mounted on a roof of a vehicle. The sensor system has a field of detection, wherein the sensor system comprises an adaptation structure for adapting a position of the field of detection relative to the vehicle in accordance with a speed of the vehicle.

The field of detection, hereinafter also referred to as the detection field, corresponds to an area over which the sensor system is enabled and configured to detect the external condition. Outside the field of detection, the sensor system does not detect the external condition.

The external condition may be any kind of condition, property, feature, or the like, outside the vehicle, wherein such condition may be spatially defined or confined such that the field of detection of the sensor system is relevant for detecting such external condition. In particular, the external condition may be the presence of other traffic, kind of other traffic, velocity and direction of movement of other traffic, for example.

If the field of detection is insufficient for detecting the external condition over a full area potentially relevant for driving, the sensor system may be configured to adapt a position of the detection field. Thereto, the sensor system comprises an adaptation structure.

The position of the detection field is adapted based on a driving condition, in particular in accordance with a speed of the vehicle. As above described, when driving at a low speed in city traffic, another position of the detection field may be preferred compared to a situation of driving at a high speed on a motorway.

In an embodiment of the roof mountable sensor system, the field of detection is directed in front of the vehicle. If the sensor system is used in combination with a driving assistance system or with an autonomous driving system, the sensor system may have the field of detection position in front of the vehicle for detecting the external condition in front of the vehicle, i.e. the main driving direction. In another embodiment, the sensor system may have its detection field position in any other direction, e.g. for driving rearwards or for detecting other traffic at a side of the vehicle.

In an embodiment of the roof mountable sensor system, the adaptation structure is configured to direct the field of detection further away from the vehicle at a first speed than at a second speed, wherein the first speed is higher than the second speed. Hence, at the higher first speed, the detection field is further away from the vehicle, e.g. in front of the vehicle, such that the external condition like other traffic further away from the vehicle is detected in time to adapt the driving conditions. At the lower second speed, e.g. in city traffic, the external condition like crossing pedestrians or children may be better detected closer in front of the vehicle. It is noted that in an embodiment the adaptation of the position of the detection field may be gradual in accordance with the vehicle speed or, in another embodiment, the detection field may have a limited number of predetermined or predefined positions. In the latter embodiment, for example, there may be a first predetermined position close in front of the vehicle for a vehicle speed below a first predetermined velocity corresponding to city traffic speed, a second predetermined position further away from the front of the vehicle for a vehicle speed higher than the first predetermined velocity and lower than a second predetermined velocity corresponding to driving outside a city but not on a motorway, and a third predetermined position even further away from the front of the vehicle for a vehicle speed higher than the second predetermined velocity corresponding to driving on a motorway, for example.

Other embodiments may combine aspects of the above-mentioned embodiments. For example, at a speed between the first predetermined velocity and the second predetermined velocity the position of the detection field may be gradually shifted from the first predetermined position to the third predetermined position instead of being fixed at the second predetermined position. As apparent to those skilled in the art, there is a virtually infinite number of possible embodiments for controlling and adapting the position of the detection field. Moreover, next to only taking speed into account, in an embodiment, other aspects may be taken into account as well. For example, a driving direction, weather conditions, local speed limits, local traffic density, proximity to other traffic, and many more other conditions. Use of artificial intelligence techniques, e.g. employing a neural network, is contemplated as a suitable method for determining an optimal position of the detection field, while driving.

In a practical embodiment, the roof mountable sensor system comprises a sensor unit. The sensor unit is rotatably mounted on the adaptation structure and the adaptation structure is configured to rotate the sensor unit in response to a change in the speed of the vehicle. A first rotation axis may be oriented horizontally and perpendicular to a main driving direction such that the field of detection may be shifted from a position on a road surface close in front of the vehicle to a position at the horizon and back.

Other or further axes of rotation may be available as well. For example, the adaptation structure may comprise a spherical mounting element and the sensor unit may be mounted on the spherical mounting element such that the sensor unit may be rotated in virtually any direction. Thus, in an embodiment of the roof mountable sensor system, the adaptation structure may be further configured to adapt the position of the field of detection relative to the vehicle in accordance with a driving direction of the vehicle.

In an embodiment, the sensor system comprises an optical sensor unit, wherein the optical sensor unit comprises a lens assembly and wherein the adaptation structure is configured to adapt the lens assembly such to adapt at least one of a focal plane and a zoom setting of the lens assembly.

In an embodiment, the roof mountable sensor system is configured to communicate with a further sensor system arranged in the vehicle, wherein the roof mountable sensor system has a first field of detection and the further sensor system has a second field of detection, wherein the first and second fields of detection form a virtually single field of detection in at least one position of the first field of detection. With the sensor system mounted on the roof of a vehicle, the detection field may be obstructed by a motor hood of the vehicle such that the sensor system can never detect the external condition directly in front of the vehicle. In such an embodiment, a further sensor system may be provided at the front of the vehicle to complement the detection field. In another exemplary embodiment, two or more roof mountable sensor systems may be employed to increase a size of the field of detection, wherein the position of at least one of the sensor systems is adaptable, while any other sensor system may have a stationary or an adaptable position of the field of detection.

For example, in a particular embodiment, the roof mountable sensor system is a first type of sensor system and the further sensor system is a second type of sensor system, wherein the first type and the second type are different. The roof mounted sensor system may be of a first type suitable for a long range detection like a radar sensor system, while the second type may have a short range like an ultrasonic sensor system.

In an embodiment, the roof mountable sensor system comprises a control unit, a drive assembly and a sensor unit. The drive assembly is operatively coupled between the control unit and the sensor unit and is configured to change the position of the field of detection. The control unit is configured to control the drive assembly to adapt the position of the field of detection in response to the speed of the vehicle. The control unit may be dedicated control unit or may be a multi-purpose control unit. In a particular embodiment, the vehicle is provided with a speed detection system and the speed detection system is operatively coupled to the control unit to provide the speed of the vehicle to the control unit. In a same or other embodiment, the control unit may be operatively coupled to one or more other sensor systems or control units in the vehicle.

In an aspect, a roof assembly for a vehicle is provided. The roof assembly comprises the roof mountable sensor system as above described. In a particular embodiment thereof, the roof assembly may comprise a moveable panel or closure member that may be selectively arranged over a roof opening. Additionally or alternatively, the roof assembly may comprise a transparent panel to allow ambient light like sun light to enter a passenger compartment of the vehicle.

In an aspect, a method of operating a roof mounted sensor system is provided. The roof mounted sensor system is configured to detect an external condition and is mounted on a roof of a vehicle. The method comprises the steps of determining a speed of the vehicle and adapting a position of a field of detection of the roof mounted sensor system relative to the vehicle in accordance with the speed of the vehicle as determined.

In an embodiment of the method, the method further comprises determining whether the speed has increased or decreased; if the speed has increased, changing the position of the field of detection further away from the vehicle; and if the speed has decreased, changing the position of the field of detection closer to the vehicle.

In an aspect, a computer program product is provided, wherein the computer program product comprises instructions to cause a control unit of a roof mountable sensor system to execute the above-described method.

In a further aspect, a computer readable medium carrying the above computer program product is provided.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description with reference to the appended schematical drawings, in which:
- Fig. 1A: shows a perspective view of a vehicle roof with an open roof assembly;
- Fig. 1B: shows an exploded view of the open roof assembly of Fig. 1A;
- Fig. 2A: shows a perspective view of a vehicle provided with a first embodiment of a roof mounted sensor system;
- Fig. 2B: shows an enlarged portion of Fig. 2A;
- Fic. 2C: shows a perspective view of a vehicle provided with a second embodiment of a roof mounted sensor system;
- Fig. 3A - 3C: illustrate a detection field of a roof mounted sensor system in a first position, a second position and a third position, respectively;
- Fig. 4A: shows a cross-sectional view of a first embodiment of a roof mountable sensor system;
- Fig. 4B: shows a first cross-sectional view of a second embodiment of a roof mountable sensor system;
- Fig. 4C: shows a second cross-sectional view of the second embodiment of a roof mountable sensor system;
- Fig. 5: shows a side view of a vehicle comprising a third embodiment of a roof mountable sensor system;
- Fig. 6A: shows a side view of a first vehicle comprising a fourth embodiment of a roof mountable sensor system;
- Fig. 6B: shows a side view of a second vehicle comprising the fourth embodiment of a roof mountable sensor system;
- Fig. 7A: shows a graph illustrating a first, second and third embodiment of a speed dependency of a position of a detection field of a roof mountable sensor system; and
- Fig. 7B: shows a graph illustrating a fourth embodiment of a speed dependency of a position of a detection field of a roof mountable sensor system.

The present invention will now be described with reference to the accompanying drawings, wherein the same reference numerals have been used to identify the same or similar elements throughout the several views.

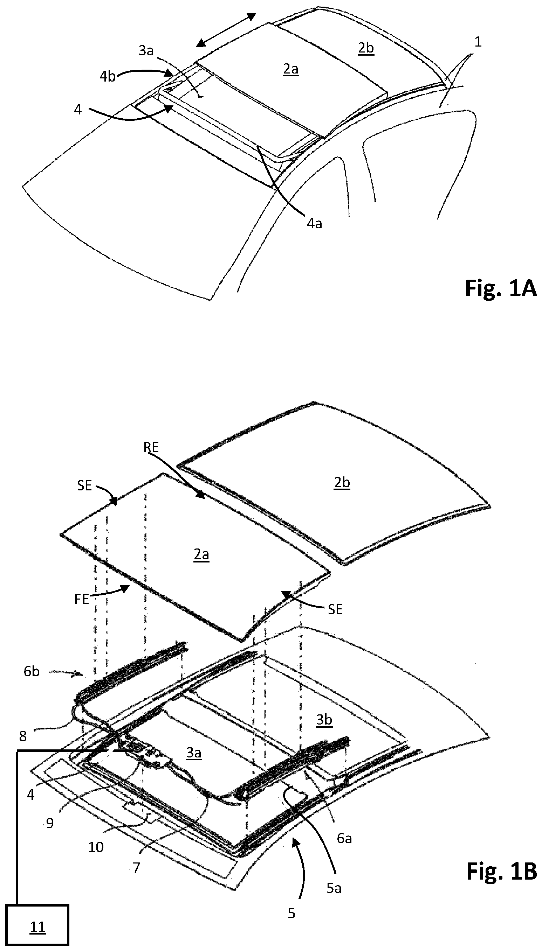

Fig. 1A illustrates a vehicle roof 1 having an open roof assembly arranged therein. The open roof assembly comprises a moveable panel 2a and a fixed panel 2b. The moveable panel 2a is also referred to as a closure member, since the moveable panel 2a is moveable over a first roof opening 3a such to enable to open and to close the first roof opening 3a. A wind deflector 4 is arranged at a front side of the first roof opening 3a.

In the illustrated embodiment, the moveable panel 2a may be in a closed position, which is a position wherein the moveable panel 2a is arranged over and closes the first roof opening 3a and thus usually is arranged in a plane of the vehicle roof 1. Further, the moveable panel 2a may be in a tilted position, which is a position wherein a rear end RE of the moveable panel 2a is raised as compared to the closed position, while a front end FE of the moveable panel 2a is still in the closed position. Further, the moveable panel 2a may be in an open position, which is a position wherein the moveable panel 2a is slid open and the first roof opening 3a is partly or completely exposed.

It is noted that the illustrated vehicle roof 1 corresponds to a passenger car. The present invention is however not limited to passenger cars. Any other kind of vehicles that may be provided with a moveable panel are contemplated as well.

Fig. 1B illustrates the same vehicle roof as shown in Fig. 1A having panels 2a and 2b. In particular, while Fig. 1A shows the open roof assembly in the open position, Fig. 1B is an exploded view of the open roof assembly in a closed position. Further, in this exploded view of Fig. 1B, it is shown that there is a second roof opening 3b. The first and second roof openings 3a, 3b are provided in a frame 5 of the open roof assembly, having a middle beam 12 of the frame 5 between the openings 3a, 3b. An edge 5a of the frame 5 defines the first roof opening 3a.

The second roof opening 3b is arranged under the fixed panel 2b such that light may enter a vehicle interior passenger compartment through the fixed panel 2b, presuming that the fixed panel 2b is a glass panel or a similarly transparent panel, for example made of a plastic material or any other suitable material. The second roof opening 3b with a transparent or translucent fixed panel 2b is optional and may be omitted in another embodiment of the open roof assembly.

The wind deflector 4 is commonly a flexible material, e.g. a woven or non-woven cloth having through holes arranged therein or a web or net. The flexible material is supported by a support structure 4a, e.g. a bar-like or tube-like structure, which structure is hingedly coupled, directly or indirectly, to the frame 5 at a hinge 4b.

The wind deflector 4 is arranged in front of the first roof opening 3a and adapts air flow when the moveable panel 2a is in the open position. In its raised position, the wind deflector 4 reduces inconvenient noise due to air flow during driving. When the moveable panel 2a is in the closed position or in the tilted position, the wind deflector 4 is held down below the front end FE of the moveable panel 2a.

Usually, the wind deflector 4 is raised by a spring force when the moveable panel 2a slides to an open position and the wind deflector 4 is pushed down by the moveable panel 2a when the moveable panel 2a slides back into its closed position. In Fig. 1A, the moveable panel 2a is shown in an open position and the wind deflector 4 is shown in a raised position. In Fig. 1B, the moveable panel 2a is shown in a closed position and the wind deflector 4 is correspondingly shown in a position in which it is held down.

Fig. 1B further illustrates a drive assembly having a first guide assembly 6a, a second guide assembly 6b, a first drive cable 7 and a second drive cable 8. The first and second guide assemblies 6a, 6b are arranged on respective side ends SE of the moveable panel 2a and may each comprise a guide and a mechanism. The guide is coupled to the frame 5, while the mechanism comprises moveable parts and is slideably moveable in the guide. The first and the second drive cables 7, 8 are provided between the mechanisms of the respective guide assemblies 6a, 6b and an electric motor 9.

The drive cables 7, 8 couple the electric motor 9 to the mechanisms of the respective guide assemblies 6a, 6b such that upon operating the electric motor 9, the mechanisms start to move. In particular, a core of the drive cable 7, 8 is moved by the electric motor 9 such to push or pull on the mechanisms of the respective guides 6a, 6b. Such a drive assembly is well known in the art and is therefore not further elucidated herein. Still, any other suitable drive assembly may be employed as well without departing from the scope of the present invention. Moreover, in a particular embodiment, an electric motor may be operatively arranged between the respective guides and the respective mechanisms of the guide assemblies 6a, 6b and, in such embodiment, a drive assembly may be omitted completely.

In the illustrated embodiment, the guide assemblies 6a, 6b may start movement with raising the rear end RE of the moveable panel 2a, thereby bringing the moveable panel 2a in the tilted position. Then, from the tilted position, the guide assemblies 6a, 6b may start to slide to bring the moveable panel 2a in the open position. The present invention is however not limited to such embodiment. For example, in another embodiment, the moveable panel 2a may be moveable to a tilted position by raising the rear end RE, while an open position is reached by first lowering the rear end RE and then sliding the moveable panel 2a under the fixed panel 2b or any other structure or element provided behind the rear end RE of the moveable panel 2a. In further exemplary embodiments, the moveable panel 2a may be merely moveable between a closed position and a tilted position or between a closed position and an open position.

In the illustrated embodiment, the electric motor 9 is mounted near or below the front end FE of the moveable panel 2a at a recess 10. In another embodiment, the electric motor 9 may be positioned at any other suitable position or location. For example, the electric motor 9 may be arranged near or below the rear end RE of the moveable panel 2a or below the fixed panel 2b.

A control module 11 is schematically illustrated and is operatively coupled to the electric motor 9. The control module 11 may be any kind of processing module, either a software controlled processing module or a dedicated processing module, like an ASIC, which are both well known to those skilled in the art. The control module 11 may be a stand-alone control module or it may be operatively connected to another control module, like a multipurpose, generic vehicle control module. In yet another embodiment, the control module 11 may be embedded in or be part of such a generic vehicle control module. Essentially, the control module 11 may be embodied by any control module suitable for, capable of and configured for performing operation of the electric motor 9 and thus the moveable roof assembly.

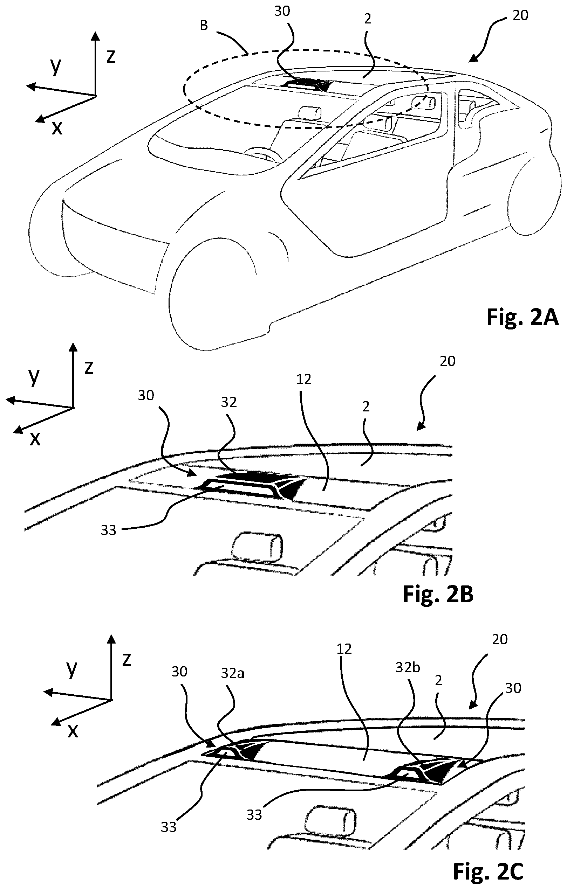

Fig. 2A shows a vehicle 20. The vehicle 20 comprises a sensor system 30 mounted on a roof of the vehicle 20, wherein a transparent panel 2 is provided in the roof. The transparent panel 2 may be part of an open-roof assembly as illustrated in Figs. 1A and 1B and described hereinabove. Fig. 2B illustrates a portion B in more detail.

In Fig. 2B, the roof mounted sensor system 30 is shown in more detail. The sensor system 30 comprises a housing 32 with a transmissive panel 33, wherein the transmissive panel 33 is configured to allow a sensor unit arranged in the housing 32 to detect an external condition. For example, if the sensor unit comprises a camera, the transmissive panel 33 is transparent for visible light; if the sensor unit comprises an infrared camera, the transmissive panel 33 allows infrared light to pass and if the sensor unit comprises a radar sensor unit, the transmissive panel 33 is configured to allow radar-wave radiation to pass through. As apparent to those skilled in the art, the transmissive panel 33 may be configured for one or for more types of sensor units. Thereto, the transmissive panel 33 may be made of a single element or more be composed of multiple elements e.g. made of different materials to allow different types of radiation, and the like, to pass. Suitable materials for different types of radiation to be detected by different types of sensor units are known in the art and are therefore not further described herein.

In the illustrated embodiment, the transmissive panel 33 is directed in a main driving direction of the vehicle 20, which corresponds to the X direction as indicated. Thus, the sensor system 30 is configured to detect the external condition in front of the vehicle 20. In another embodiment, the sensor system 30 may be configured to detect the external condition in any other direction.

The housing 32 of the illustrated embodiment is a part of a frontal cover 12 of the roof assembly. The sensor housing 32 may be formed as an integral part of the frontal cover 12 or the housing 32 may be separately formed and mounted on the frontal cover 12 or a structure underneath the frontal cover 12. In the latter embodiment, the frontal cover 12 may comprise a through hole for mounting the sensor system 30 or the frontal cover 12 may comprise two or more separate parts arranged around the housing 32.

Fig. 2C shows another embodiment, wherein two housings 32a, 32b are arranged on the vehicle 20. The two housings 32a, 32b may each house a separate sensor system 30 or the two housings 32a, 32b may each comprise at least one element of a single sensor system 30. For example, each housing 32a, 32b may comprise a camera, wherein such cameras are configured as a stereoscopic camera system. As apparent to those skilled in the art, the housing 32 may take any form, shape and size that is suitable for the sensor system 30 housed therein. Other considerations for designing the housing 32 may include aerodynamics and aesthetics, for example. In another example, both housings 32a, 32b may each hold a separate sensor system, wherein at least one of the sensor systems is provided with a speed-dependent position of its field of detection, while the other one may also have an adaptable position or may have a stationary field of detection. In such embodiment, one sensor system may adapt to the speed of the vehicle, while the other may be used to detect the external condition at a fixed position relative to the vehicle, for example close in front of the vehicle.

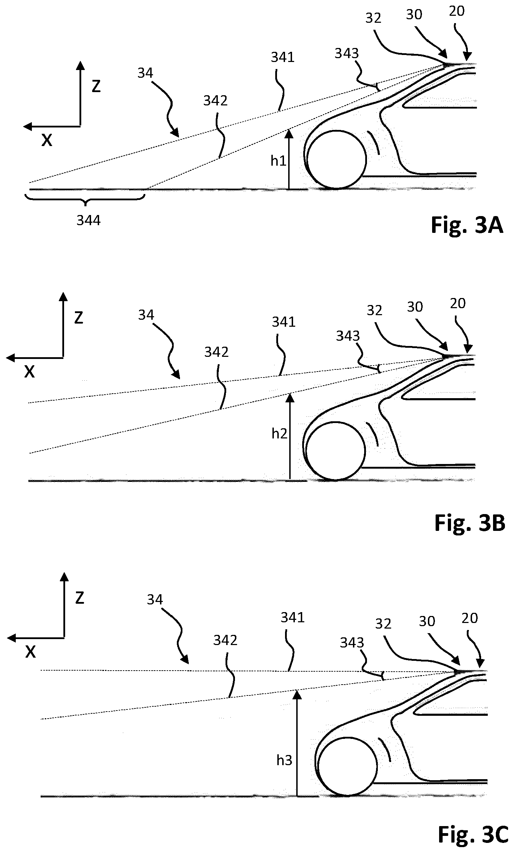

Figs. 3A - 3C illustrate a position adaptation capability of a field of detection of the roof mountable sensor system 30. In Figs. 3A - 3C, the vehicle 20 corresponds to the vehicle 20 illustrated in Figs. 2A and 2B and is provided with the sensor system 30 at the roof. The sensor system 30 is configured to detect the external condition in front of the vehicle 20 as seen in the main driving direction X.

The sensor system 30 has a field of detection 34 which is confined between an upper field boundary 341 and a lower field boundary 342. Obviously, the detection field 34 may also be confined by side field boundaries, which are not shown in Figs. 3A - 3C. The upper field boundary 341 and the lower field boundary 342 diverge from the sensor system 30 under a detection angle 343. As illustrated in Fig. 3A, the detection field 34 may be directed at a surface e.g. a road surface forming a detection surface area 344.

A position of the detection field 34 may be defined by a height level of the lower field boundary 342 directly in front of the vehicle 20. As shown in Fig. 3A, at a first height level h1, the detection field 34 is directed at a road surface, forming the detection surface area 344 thereon, close in front of the vehicle 20. Moreover, adapting the detection field 34 to a height level lower than the first height level h1 will result in a motor hood of the vehicle 20 interfering in the detection field 34, while not providing any more detailed information regarding the external condition close in front of the vehicle 20. So, the first height level h1 may be considered a functionally minimum height level.

The first height level h1 is considered suitable for use with a low speed of the vehicle 20 e.g. in city traffic to enable to detect objects close in front of the vehicle 20, if the external condition relates to other traffic, for example. In another embodiment, the external condition may relate to a road condition and, thereto, the detection field 34 may be directed at a surface close in front of the vehicle 20 driving at relatively low speed to timely detect potholes, bumps and the like, e.g. when driving on rough terrain.

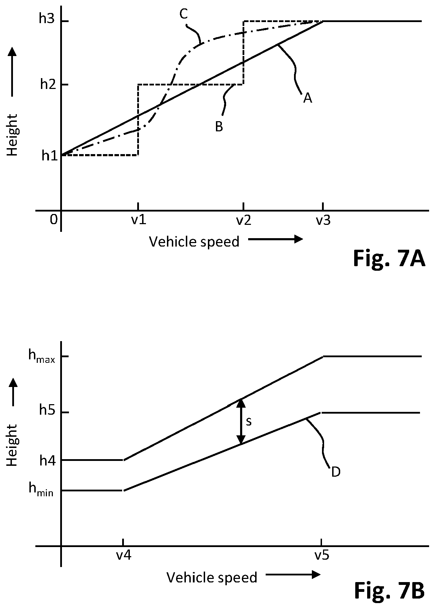

If and when no obstructions are expected to suddenly appear close in front of the vehicle 20, the vehicle 20 may be driven at a higher speed. In view of an increased braking distance at such a higher speed, the sensor system 30 may be desired to adapt the position of the detection field 34 such that objects and obstructions further away from the front of the vehicle 20 are detected in time for braking or for an evasive manoeuvre, for example. As illustrated in Fig. 3B, the position of the detection field 34 may be adapted by increasing the height level to a second height level h2. As described hereinafter in relation to Figs. 7A and 7B, the height level may be adapted gradually or stepwise, for example.

At the second height level h2, the detection field 34 eventually meets the road surface and may thus still be used for detecting a road condition, for example, while a distance of detection of other traffic and obstructions remains limited. When driving at even higher speed, such as when driving on a motorway, the distance of detection may be preferred to be increased further.

As illustrated in Fig. 3C, the height level may be increased to a third height level h3. The detection field 34 may thus be substantially parallel to a road surface and be directed at the horizon, for example. A maximum detection distance may thus be obtained, while a road condition cannot be detected. Hence, such position of the detection field 34 is particularly suitable for detecting other traffic and obstructions on a road in front of the vehicle 20. It may be used, for example, to adapt a driving speed to a distance between the vehicle 20 and any traffic in front of the vehicle 20.

As apparent to those skilled in the art, an adaptation of the position of the detection field 34 may be selected in accordance with the envisaged and desired function and in relation to the driving speed of the vehicle 20. For example, in another embodiment, the sensor system 30 may comprise a camera mounted on the roof and directed rearwards. During driving in a forward direction, i.e. at a positive speed, the detection field 34 of the camera may be directed substantially parallel to a road surface and the obtained images may be used as a rear view mirror system to observe other traffic behind the vehicle 20, while the position of the detection field 34 may be directed more towards the road surface, when the vehicle 20 drives in the reverse direction, i.e. at a negative speed, for enabling accurate and safe reverse driving e.g. for parking or for observing a road condition.

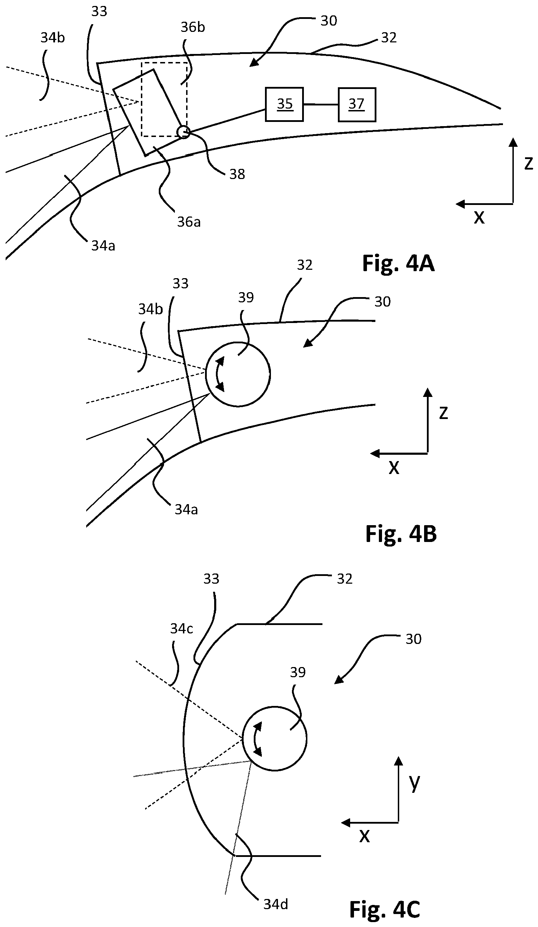

Fig. 4A shows a first embodiment of a roof mountable sensor system 30 comprising the housing 32 and the transmissive panel 33. In the housing 32, a sensor unit 36a in a first orientation is provided. The sensor unit 36a in the first orientation has a detection field 34a, which is directed close in front of the vehicle on which the sensor system 30 may be mounted.

The sensor unit 36a is mounted on an adaptation structure comprising a rotation axle 38. The rotation axle 38 may be operatively coupled to an actuator unit 35 for rotating the rotation axle 38 and thereby changing an orientation of the sensor unit 36a and adapting the position of the detection field 34a. Thus, the sensor unit 36b in a second orientation may be obtained, wherein the sensor unit 36b has a detection field 34b directed substantially horizontally.

The actuator unit 35 may comprise any suitable kind of actuator such as an electric rotary motor. In an embodiment, a linear motor like a voice coil may be applied. In such embodiment, the linear actuator may induce a torque on the sensor unit 36a/36b such that the sensor unit 36a/36b may rotate around the rotation axle 38. Further, in yet another embodiment, the rotation axle 38 may be replaced with any other suitable adaptation structure, as apparent to those skilled in the art.

The actuator unit 35 is operatively coupled to a control unit 37, wherein the control unit 37 is configured to control and adapt the orientation of the sensor unit 36a/36b for adapting the position of the detection field 34. The control unit 37 may receive an input signal representing a vehicle speed from a generic vehicle control unit or the control unit 37 may comprise a sensor for detecting an actual speed. In a particular embodiment, the control unit 37 may be configured to determine an actual speed from a signal received from the sensor unit 36a/36b. Further, the control unit 37 may be configured to interpret an output from the sensor unit 36a/36b to determine the external condition. As apparent to those skilled in the art, the control unit 37 may be configured, e.g. programmed by application of a suitable computer program product, to perform or control other operations as well.

Fig. 4B illustrates a second embodiment, wherein the adaptation structure comprises a rotatable frame element 39. The rotatable frame element 39 may be a cylindrical frame element for rotating around a single axis, e.g. an axis extending in a width direction Y of the vehicle 20. In a particular embodiment, the adaptation structure may comprises a substantially spherical rotatable frame element 39 for rotating around at least two axis, e.g. an axis extending in the width direction Y and an axis extending in a vertical direction Z, as illustrated in Fig. 4C.

In the rotatable frame element 39, a sensor unit is arranged such that the sensor unit rotates with the rotatable frame element 39 to thereby adapt a position of the corresponding detection field 34a/34b as shown. As shown in and described in relation to Fig. 4A, the rotatable frame element 39 may be operatively coupled to an actuator unit 35 (not shown in Fig. 4B) and a control unit 37 (not shown in Fig. 4B) for controlling the position of the detection field of the sensor unit and optionally for operating the sensor unit.

Fig. 4C further illustrates a curved transmissive panel 33, which may be preferred for aerodynamics, for example. While the transmissive panel 33 is curved in the width direction Y, it is apparent that the transmissive panel 33 may be curved in any other direction as well, provided that such curvature does not interfere with the operation of the sensor system 30. Still, in the embodiment of Fig. 4C, the position of the detection field 34a/34b is adaptable around the substantially vertical axis Z, which may be desired in order to enable to detect the external condition in a turn of the road, for example.

In another embodiment, the adaptability of the position of the detection field 34 may be used advantageously for performing a scanning movement with the sensor unit for increasing an overall detection field, which will be described in more detail in relation to Fig. 7B.

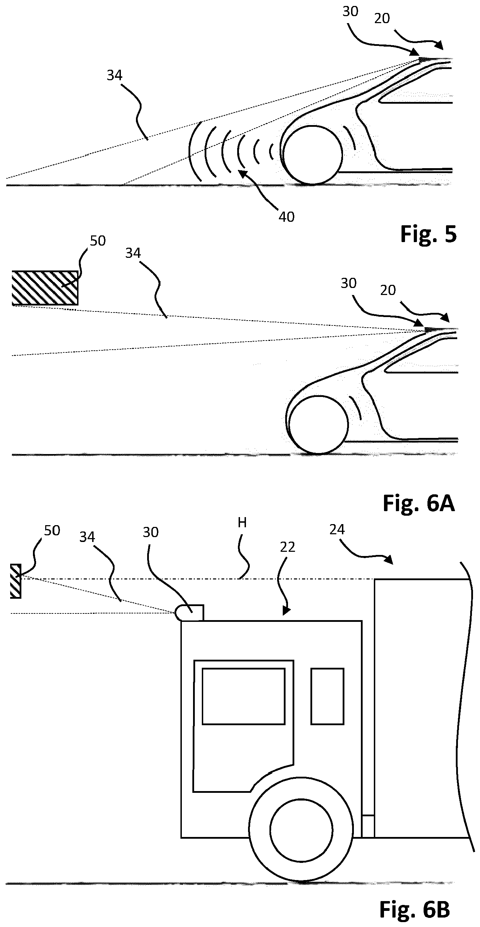

Fig. 5 illustrates an embodiment, wherein the vehicle 20 is provided with a roof mounted sensor system 30 having a first detection field 34 and is provided with a second, further sensor system having a second detection field 40. The second detection field 40 may complement the first detection field 34 to form a virtually single, enlarged detection field.

For example, the second sensor system may be arranged in or directly behind a bumper unit of the vehicle 20. The type of sensor system may be the same or different from the first sensor system 30 mounted on the roof. In a particular embodiment, the roof mounted sensor system 30 is a radar sensor system for long range detection field 34 and the second sensor system is an ultrasonic sensor system for a short range detection field 40.

As shown in Fig. 5, the combination of two detection fields 34, 40 may be advantageous when the external condition close in front of the vehicle, for example, is desired to be detected. Due to the position of the sensor system 30 at the roof level, the motor hood may prevent detection of the external condition directly in front of the vehicle 20. In such circumstances, the second sensor system may be suitable to detect the same external condition at the location where the first roof mounted sensor system 30 is not able to detect the external condition. The detected external condition as detected by the first, roof mounted sensor system and by the second sensor system may be combined to virtually form a larger, single detection field.

Figs. 6A and 6B illustrate an advantageous application of a roof mounted sensor system 30. The roof mounted sensor system 30 is configured to detect an obstruction 50 like a garage roof or a bridge, or the like, and to determine whether the vehicle 20 may safely drive under the obstruction 50. In particular, when the roof mounted sensor system 30 is arranged on a lorry having a lorry cabin 22 and a tonnage 24 that has a height H higher than the lorry cabin 22, the roof mounted sensor system 30 may assist a driver to detect whether the lorry may safely pass under the obstruction by suitable calibration and configuration of the sensor system 30.

It is noted that, in general, the mounting location at the roof may be preferred over mounting at the bumper unit level. For example, it may prevent the need for recalibration of the sensor system 30 in case the vehicle 20 accidentally hits any object at the level of the bumper unit. While the bumper unit may be designed to absorb and withstand an accidental minor collision, a sensor system arranged at or directly behind the bumper unit may be sensitive to such collision, for example requiring recalibration after such minor collision. When arranged at the roof level, such collision will not affect the sensor system, preventing costs and efforts for recalibration.

Figs. 7A and 7B illustrate embodiments of speed dependency of the position of the detection field of the roof mounted sensor system. Figs. 7A and 7B both show a graph with a horizontal axis representing a vehicle speed and a vertical axis representing a representative height of the detection field, for example as shown in and described in relation to Figs. 3A - 3C. In practice, any other measure for representing the position of the detection field may be used as well, of course.

In a first embodiment A as illustrated in Fig. 7A with a solid line, the height of the detection field is proportional to the vehicle speed. When the vehicle is not moving, i.e. at a vehicle speed of 0, the height corresponds to a height h1. Then, with gradually increasing speed, the height gradually increases, until the vehicle speed reaches a speed v3. At the speed v3, the detection field is positioned at a height h3, e.g. equal to a substantially horizontal orientation such that further increasing the height would be counter-effective.

Instead of a proportional relation between vehicle speed and detection field height, in a second embodiment B (dashed line), the height of the detection field is adapted stepwise. At a vehicle speed below speed v1, the detection field height corresponds to height h1; at a vehicle speed exceeding speed v2, the detection field height corresponds to height h3; and at a vehicle speed therebetween, the detection field height corresponds to height h2.

In a third embodiment C (dot-dashed line), a gradual, non-proportional relation is employed. Such a relation may be determined experimentally, for example. Any other relation may be used as well, of course. Moreover, while herein it is described that the detection field height increases with speed, in another embodiment, the detection field height may decrease with speed, depending on the requirements, the kind of sensor system and the external condition detected by the sensor system, for example.

Fig. 7B illustrates a fourth embodiment D, wherein the sensor system is operated not only to adapt the position of the detection field to the vehicle speed, the adaptation structure of the sensor system may also be employed advantageously for a scanning operation of the sensor system such that the detection field is artificially increased in size, although temporal detection accuracy may be reduced. In the fourth embodiment D, a scanning range s is applied. So, for example, up to a vehicle speed v4, the detection height is varied between a lower height level equal to a minimum height hₘᵢₙ and an upper height level equal to a height h4.

When the vehicle speed exceeds the speed v4, the scanning range gradually increases. Further, the lower height level increases gradually from the minimum height hₘᵢₙ to a height h5, while the upper height level increases gradually from the height h4 to a maximum height hₘₐₓ.

As illustrated in Fig. 7A, the relation between the vehicle speed and the detection field height may take any suitable form. A scanning operation may be performed at any vehicle speed or may be limited to a predetermined range of the vehicle speed.

In a particular embodiment, the scanning operation may be performed over a predetermined height range every time the vehicle starts to move from a standstill.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in expectedly any appropriately detailed structure. In particular, features presented and described in separate dependent claims may be applied in combination and any advantageous combination of such claims are herewith disclosed.

Further, it is contemplated that structural elements may be generated by application of three-dimensional (3D) printing techniques. Therefore, any reference to a structural element is intended to encompass any computer executable instructions that instruct a computer to generate such a structural element by three-dimensional printing techniques or similar computer controlled manufacturing techniques. Furthermore, any such reference to a structural element is also intended to encompass a computer readable medium carrying such computer executable instructions.

Further, the terms and phrases used herein are not intended to be limiting, but rather to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described it is apparent that the same may be varied in many ways. Such variations are not to be regarded as a departure from the spirit and scope of the invention, and all such modifications as would be apparent to one skilled in the art are intended to be included within the scope of the following claims.

## Claims

1. A roof mountable sensor system for detecting an external condition and being configured to be mounted on a roof of a vehicle, the sensor system having a field of detection, wherein the sensor system comprises an adaptation structure for adapting a position of the field of detection relative to the vehicle in accordance with a speed of the vehicle.

2. The roof mountable sensor system according to claim 1, wherein the field of detection is directed in front of the vehicle.

3. The roof mountable sensor system according to claim 1, wherein the adaptation structure is configured to direct the field of detection further away from the vehicle at a first speed than at a second speed, wherein the first speed is higher than the second speed.

4. The roof mountable sensor system according to claim 1, wherein a sensor unit is rotatably mounted on the adaptation structure and wherein the adaptation structure is configured to rotate the sensor unit in response to a change in the speed of the vehicle.

5. The roof mountable sensor system according to claim 1, wherein the adaptation structure is further configured to adapt the position of the field of detection relative to the vehicle in accordance with a driving direction of the vehicle.

6. The roof mountable sensor system according to claim 1, wherein the roof mountable sensor system is configured to communicate with a further sensor system arranged in the vehicle, wherein the roof mountable sensor system has a first field of detection and the further sensor system has a second field of detection, wherein the first and second fields of detection form a virtually single field of detection in at least one position of the first field of detection.

7. The roof mountable sensor system according to claim 6, wherein the roof mountable sensor system is a first type of sensor system and the further sensor system is a second type of sensor system, wherein the first type and the second type are different.

8. The roof mountable sensor system according to claim 1, wherein the sensor system comprises a control unit, a drive assembly and a sensor unit, the drive assembly being operatively coupled between the control unit and the sensor unit and being configured to change the position of the field of detection, and wherein the control unit is configured to control the drive assembly to adapt the position of the field of detection in response to the speed of the vehicle.

9. The roof mountable sensor system according to claim 8, wherein the vehicle is provided with a speed detection system, the speed detection system being operatively coupled to the control unit to provide the speed of the vehicle to the control unit.

10. A roof assembly for a vehicle, the roof assembly comprising the roof mountable sensor system according to claim 1.

11. A method of operating a roof mounted sensor system, the roof mounted sensor system for detecting an external condition and being mounted on a roof of a vehicle, the method comprising the steps of
a. determining a speed of the vehicle,
b. adapting a position of a field of detection of the roof mounted sensor system relative to the vehicle in accordance with the speed of the vehicle as determined in step a.

12. The method according to claim 11, wherein step b of the method further comprises
b1. determining whether the speed has increased or decreased;
b2. if the speed has increased, changing the position of the field of detection further away from the vehicle; and
b3. if the speed has decreased, changing the position of the field of detection closer to the vehicle.

13. A computer program product comprising instructions to cause a control unit of a roof mountable sensor system to execute the method according to claim 11.

14. A computer readable medium carrying the computer program product according to claim 13.
